# EUROPÄISCHE PATENTSCHRIFT

(11) **EP 2 801 743 B1**
(45) Veröffentlichungstag und Bekanntmachung des Hinweises auf die Patenterteilung: **12.07.2017**
(21) Anmeldenummer: 13166901.2
(22) Anmeldetag: 07.05.2013
(51) Int. Cl.: B29C 65/00, B29C 65/36, F16L 47/02

(54) **Verfahren zur Verbindung eines Leitungsverbinders mit einer fluidführenden Kraftfahrzeugleitung**
Method for connecting a conduit connector with a fluid-conducting motor vehicle line
Procédé permettant de relier un connecteur de conduite avec une conduite de véhicule automobile contenant un fluide

(43) Veröffentlichungstag der Anmeldung: 12.11.2014
(73) Patentinhaber: TI Automotive (Fuldabrück) GmbH, 34277 Fuldabrück (DE)
(72) Erfinder: Barthel, Iris, 34270 Schauenburg (DE); Jensen, Hans, 73265 Dettingen unter Teck (DE)
(74) Vertreter: Rohmann, Michael

(56) Entgegenhaltungen:
- EP-A1- 2 172 328
- FR-A1- 2 748 415
- US-A- 3 238 346
- US-A1- 2007 200 342

## Beschreibung

Die Erfindung betrifft ein Verfahren zur Verbindung eines Leitungsverbinders mit einer fluidführenden Kraftfahrzeugrohrleitung, wobei die Rohrleitung aus Kunststoff bzw. im Wesentlichen aus Kunststoff besteht. - Das erfindungsgemäße Aggregat aus dem Leitungsverbinder und der fluidführenden Kraftfahrzeugrohrleitung ist insbesondere für die Durchleitung eines Kraftstoffs für eine Brennkraftmaschine eines Kraftfahrzeuges vorgesehen. Grundsätzlich kann das erfindungsgemäße Aggregat aber auch zur Durchleitung einer Harnstofflösung bzw. einer wässrigen Harnstofflösung im Rahmen eines Katalysatorsystems eines Kraftfahrzeuges eingesetzt werden.

Verfahren der eingangs genannten Art sind aus der Praxis in verschiedenen Ausführungsformen bekannt (siehe z.B. das Dokument US2007/0200342A1). Bei den mit diesen bekannten Verfahren erzeugten Aggregaten aus Leitungsverbinder und Rohrleitung besteht das Problem, dass das Rohrleitungsende der Rohrleitung Beschädigungen bzw. nachteilhaften Einflüssen ausgesetzt ist. Vor allem bei mehrschichtigen Rohrleitungen besteht das Problem der Delaminierung der Schichten. Außerdem sind die Rohrleitungsenden häufig nicht ausreichend vor chemischen Einflüssen, wie beispielsweise vor der Einwirkung von Salzlösungen und dergleichen geschützt. Die bislang bekannten Verfahren zur Verbindung von Leitungsverbindern mit einer fluidführenden Kraftfahrzeugrohrleitung bedürfen der Verbesserung.

Demgegenüber liegt der Erfindung das technische Problem zugrunde, ein Verfahren der eingangs genannten Art anzugeben, bei dem die vorstehend beschriebenen Nachteile effektiv und funktionssicher vermieden werden.

Zur Lösung dieses technischen Problems lehrt die Erfindung ein Verfahren zur Verbindung eines Leitungsverbinders mit einer fluidführenden Kraftfahrzeugleitung, wobei die Rohrleitung aus Kunststoff bzw. im Wesentlichen aus Kunststoff besteht, wobei ein Rohrleitungsende der Rohrleitung in einen über den Umfang des Leitungsverbinders umlaufenden Aufnahmeschacht des Leitungsverbinders eingeführt wird, wobei vorzugsweise die Wandung bzw. die Wandungen des Aufnahmeschachtes zumindest zum Teil aus Kunststoff bestehen, wobei in bzw. an dem Aufnahmeschacht zumindest ein Leitfähigkeitselement angeordnet ist, wobei das Leitfähigkeitselement durch elektromagnetische Induktion erhitzt wird und wobei als Folge dieser Erhitzung zumindest Kunststoffbereiche des Rohrleitungsendes aufschmelzen, so dass das Rohrleitungsende mit der Wandung bzw. den Wandungen des Aufnahmeschachtes verschweißt wird. Das Leitfähigkeitselement ist besonders bevorzugt ein elektrischer Leiter. Beispielsweise ist das Leitfähigkeitselement ein Metallelement oder ein im Wesentlichen aus einem elektrisch leitfähigen Kunststoff bestehendes Leiterelement.

Fluidführende Kraftfahrzeugrohrleitung meint insbesondere eine Rohrleitung zur Durchleitung eines fluiden Mediums und vor allem zur Durchleitung von Kraftstoffen in Kraftfahrzeugen. Grundsätzlich könnte die Kraftfahrzeugleitung aber auch zur Durchleitung einer Harnstofflösung bzw. einer wässrigen Harnstofflösung eingesetzt werden. Nachfolgend wird statt des Begriffes Kraftfahrzeugrohrleitung auch einfach der Begriff Rohrleitung verwendet. - Es liegt im Rahmen der Erfindung, dass das fluide Medium bzw. das flüssige Medium durch die Rohrleitung und durch den Leitungsverbinder geführt wird. Es liegt fernerhin im Rahmen der Erfindung, dass der Leitungsverbinder hierzu einen Innenkanal zur Durchführung des fluiden Mediums aufweist. Empfohlenermaßen ist der Leitungsverbinder für den Anschluss einer weiteren Rohrleitung oder für den Anschluss eines Aggregates, wie eines Tankes oder dergleichen, vorgesehen. Vorzugsweise handelt es sich bei dem Leitungsverbinder um einen Schnellverbinder bzw. um einen sogenannten Quick-Connektor.

Es liegt im Rahmen der Erfindung, dass es sich bei der Wandung bzw. bei den Wandungen des Aufnahmeschachtes um dem aufgenommenen Rohrleitungsende zugewandten Wandungen bzw. Innenwandungen handelt. Zweckmäßigerweise liegt das Rohrleitungsende mit seiner Außenwand und/oder mit seiner Innenwand unmittelbar an der Wandung bzw. an den Wandungen des Aufnahmeschachtes an. - Die Verbindung des Rohrleitungsendes mit der Wandung bzw. mit den Wandungen des Aufnahmeschachtes erfolgt erfindungsgemäß über Induktionsschweißen. Zweckmäßigerweise wird eine übliche bzw. aus dem Stand der Technik bekannte Induktionsvorrichtung zur Erzeugung der Induktionsschweißverbindung eingesetzt. Empfohlenermaßen wird dazu zumindest eine den Leitungsverbinder zumindest teilweise umgebende Induktionsspule verwendet. Das Induktionsschweißen findet mit Hilfe eines elektromagnetischen Wechselfeldes statt, das zweckmäßigerweise durch Radiowellen realisiert wird.

Nach besonders bevorzugter Ausführungsform der Erfindung ist die Kraftfahrzeugrohrleitung als mehrschichtige Rohrleitung ausgebildet. Empfohlenermaßen besteht die Außenschicht und/oder die Innenschicht der mehrschichtigen Rohrleitung aus Kunststoff. Es liegt im Rahmen der Erfindung, dass es sich dabei um mit Hilfe des Induktionsschweißverfahrens verschweißbare Kunststoffe handelt. Zweckmäßigerweise erfolgt bei dem Induktionsschweißverfahren das zum Schweißen der Rohrleitung erforderliche Aufheizen durch das Leitfähigkeitselement. Grundsätzlich könnte eine Schicht bzw. eine innere Schicht der mehrschichtigen Rohrleitung auch als metallische Schicht oder dergleichen ausgebildet sein.

Gemäß einer empfohlenen Ausführungsform der Erfindung besteht die Außenschicht der Rohrleitung aus zumindest einem Polymer aus der Gruppe "Polyamid, Polyphenylensulfid, Polyphthalamid". Es liegt im Rahmen der Erfindung, dass die Außenschicht der Rohrleitung die mechanische Festigkeit bzw. Stabilität der Rohrleitung sicherstellt. Nach besonders bevorzugter Ausführungsform der Erfindung besteht die Außenschicht der Rohrleitung aus einem Polyamid. - Eine empfohlene Ausführungsform der Erfindung ist dadurch gekennzeichnet, dass die Innenschicht der Rohrleitung aus zumindest einem Polymer aus der Gruppe "Polyamid, Fluorpolymer, Polyphenylensulfid, Polybutylennaphtalat" besteht. Gemäß einer Ausführungsvariante der Erfindung ist die Innenschicht der Kraftfahrzeugleitung elektrisch leitfähig ausgebildet. Dazu werden dem Material bzw. dem Kunststoff der Innenschicht Leitfähigkeitszusätze, wie Leitruß und dergleichen, zugefügt.

Es liegt im Rahmen der Erfindung, dass die Wandungen des Aufnahmeschachtes des Leitungsverbinders aus vorzugsweise faserverstärktem Kunststoff bestehen. Es ist möglich, dass die Wandungen aus gegebenenfalls faserverstärktem Polyamid oder Polyphthalamid bestehen bzw. im Wesentlichen daraus bestehen. Im Wesentlichen daraus bestehen meint hier insbesondere, dass die Wandungen des Aufnahmeschachtes zu zumindest 80 Gew.-% bzw. zumindest zu 90 Gew.-% aus dem vorzugsweise faserverstärkten Kunststoff bzw. aus vorzugsweise faserverstärktem Polyamid oder möglicherweise faserverstärktem Polyphthalamid bestehen. Als Faserverstärkung werden zweckmäßigerweise Glasfasern verwendet.

Vorzugsweise ist die Rohrleitung im Querschnitt kreisförmig ausgebildet und bevorzugt ist der Aufnahmeabschnitt zylinderförmig bzw. im Querschnitt kreisförmig ausgebildet. Grundsätzlich sind im Rahmen der Erfindung aber auch andere Querschnitte für die Rohrleitung bzw. für den Aufnahmeabschnitt möglich.

Es liegt im Rahmen der Erfindung, dass ein elektrisch leitfähiges Leitfähigkeitselement für das erfindungsgemäße Verfahren eingesetzt wird. Dieses Leitfähigkeitselement kann insbesondere aus Kupfer, Stahl oder dergleichen Metall bestehen. Besonders bevorzugt weist das Metall, aus welchem das Leitfähigkeitselement besteht, eine schlechtere elektrische Leitfähigkeit als Kupfer auf. Nach ganz besonders bevorzugter Ausführungsform der Erfindung läuft das zumindest eine Leitfähigkeitselement über den Umfang des Leitungsverbinders bzw. über den Umfang des Aufnahmeschachtes um. Zweckmäßigerweise ist das zumindest eine Leitfähigkeitselement ringförmig bzw. zylinderförmig und im Querschnitt kreisförmig ausgebildet. - Eine besonders empfohlene Ausführungsform der Erfindung ist dadurch gekennzeichnet, dass das zumindest eine Leitfähigkeitselement mit der Maßgabe angeordnet ist, dass das Rohrleitungsende im in den Aufnahmeschacht eingeführten Zustand mit seinem Stirnende an dem zumindest einen Metallelement anliegt. Dann erfolgt zweckmäßigerweise ein Aufschmelzen des Kunststoffes des Rohrleitungsendes im Bereich seines Stirnendes. Es liegt im Rahmen der Erfindung, dass das Rohrleitungsende einer bevorzugt mehrschichtigen Rohrleitung zumindest an seinem Stirnende zumindest an der Außenschicht und/oder an der Innenschicht aufgeschmolzen wird, so dass das Rohrleitungsende mit der Wandung bzw. mit den Wandungen des Aufnahmeschachtes verschweißt wird.

Empfohlenermaßen wird die Innenwandung und/oder die Außenwandung des Aufnahmeschachtes des Leitungsverbinders zumindest bereichsweise aufgeschmolzen, so dass das Rohrleitungsende mit der Innenwandung und/oder der Außenwandung des Aufnahmeschachtes verschweißt wird. Zweckmäßigerweise wird also sowohl das Rohrleitungsende bzw. das Stirnende des Rohrleitungsendes zumindest bereichsweise aufgeschmolzen und wird die Innenwandung und/oder die Außenwandung des Aufnahmeschachtes zumindest bereichsweise aufgeschmolzen, so dass eine stoffschlüssige Verschweißung bzw. Verbindung zwischen Rohrleitungsende und Aufnahmeschacht des Leitungsverbinders hergestellt werden kann.

Es liegt im Rahmen der Erfindung, dass das Rohrleitungsende der Kraftfahrzeugrohrleitung formschlüssig und insbesondere spielfrei in den Aufnahmeschacht eingeführt wird. Spielfrei meint dabei, dass im Bereich der Anlageflächen zwischen Rohrleitungsende und der Wandung bzw. den Wandungen des Aufnahmeschachtes keine bzw. möglichst wenig Freiräume vorhanden sind. - Gemäß bevorzugter Ausführungsform der Erfindung beträgt die Länge des Aufnahmeschachtes mindestens 25%, bevorzugt mindestens 20% der Länge des Leitungsverbinders. Der Begriff Länge bezieht sich dabei auf die Längsmittelachse des Leitungsverbinders bzw. der Kraftfahrzeugrohrleitung.

Der Erfindung liegt die Erkenntnis zugrunde, dass mit dem erfindungsgemäßen Verfahren eine sehr stabile und funktionssichere Verbindung zwischen Leitungsverbinder und Rohrleitung hergestellt werden kann. Insbesondere kann die Rohrleitung bzw. das Rohrleitungsende durch diese Verbindung vor mechanischen Beschädigungen oder dergleichen effektiv geschützt werden. Eine Delaminierung einer mehrschichtigen Rohrleitung kann bei Herstellung einer erfindungsgemäßen Verbindung quasi ausgeschlossen werden. Auch können die Rohrleitungsenden der zu verbindenden Rohrleitungen effektiv vor korrosiven bzw. chemischen Einflüssen, wie Einflüssen von Salzlösungen oder dergleichen geschützt werden. Das erfindungsgemäße Verfahren kann auch mit geringem Kostenaufwand durchgeführt werden. Ein weiterer Vorteil des erfindungsgemäßen Verfahrens ist, dass bei dem Schweißvorgang eine Verunreinigung des Strömungskanals der Rohrleitung vermieden wird.

Nachfolgend wird die Erfindung anhand einer lediglich ein Ausführungsbeispiel darstellenden Zeichnung näher erläutert. Es zeigen in schematischer Darstellung:
- Fig. 1: eine nach dem erfindungsgemäßen Verfahren hergestellte Verbindung zwischen einem Leitungsverbinder und einem Rohrleitungsende im Schnitt und
- Fig. 2: den Gegenstand gemäß Fig. 1 in einem anderen Funktionszustand.

Die Figuren veranschaulichen das erfindungsgemäße Verfahren zur Verbindung eines Leitungsverbinders 1 mit einer fluidführenden Kraftfahrzeugrohrleitung 2. Bei dem Leitungsverbinder 1 mag es sich im Ausführungsbeispiel um einen Schnellverbinder bzw. um einen sogenannten Quick-Connektor handeln. Die Kraftfahrzeugrohrleitung 2 besteht aus Kunststoff und ist bevorzugt und im Ausführungsbeispiel als mehrschichtige Rohrleitung 2 ausgebildet. Im Ausführungsbeispiel weist die Rohrleitung 2 drei Schichten 3, 4, 5 auf. Sowohl die Außenschicht 3 als auch die Innenschicht 5 der mehrschichtigen Rohrleitung 2 mag im Ausführungsbeispiel aus einem Polyamid bestehen.

Erfindungsgemäß wird das Rohrleitungsende 6 der Rohrleitung 2 in einen über den Umfang des Leitungsverbinders 1 umlaufenden Aufnahmeschacht 7 eingeführt. Die Figuren zeigen den bereits eingeführten Zustand des Rohrleitungsendes 6. Bevorzugt und im Ausführungsbeispiel besteht der Aufnahmeschacht 7 bzw. die Wandungen 8, 9 des Aufnahmeschachtes 7 aus Kunststoff und gemäß einer empfohlenen Ausführungsform aus Polyamid. Zweckmäßigerweise ist die Rohrleitung 2 im Querschnitt kreisförmig ausgebildet und bevorzugt ist der Aufnahmeschacht 7 zylinderförmig bzw. im Querschnitt kreisförmig ausgebildet. Die Rohrleitung 2 ist vorzugsweise und im Ausführungsbeispiel formschlüssig und bevorzugt spielfrei in dem Aufnahmeschacht 7 des Leitungsverbinders 1 aufgenommen.

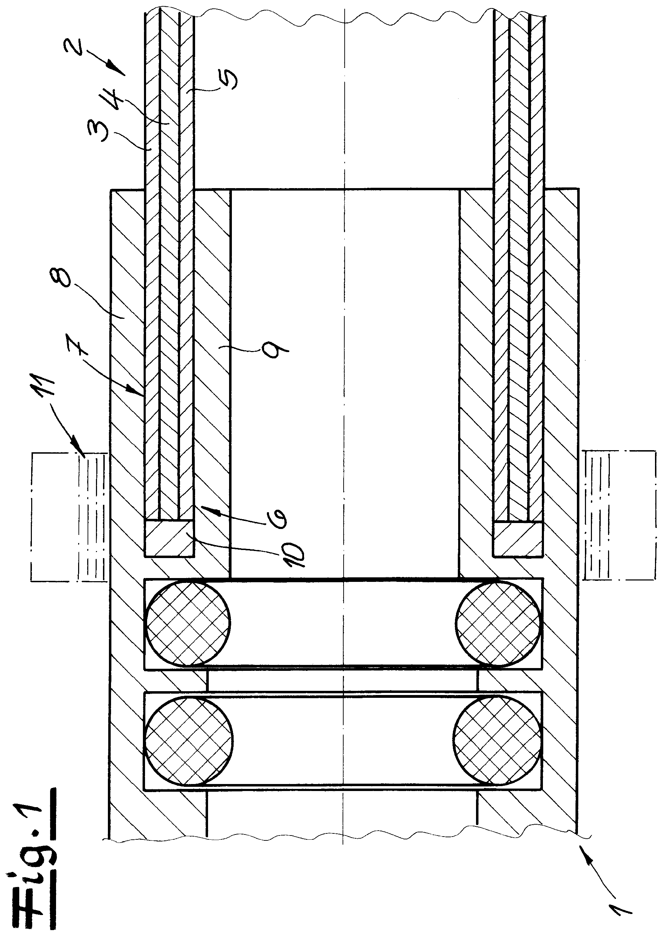

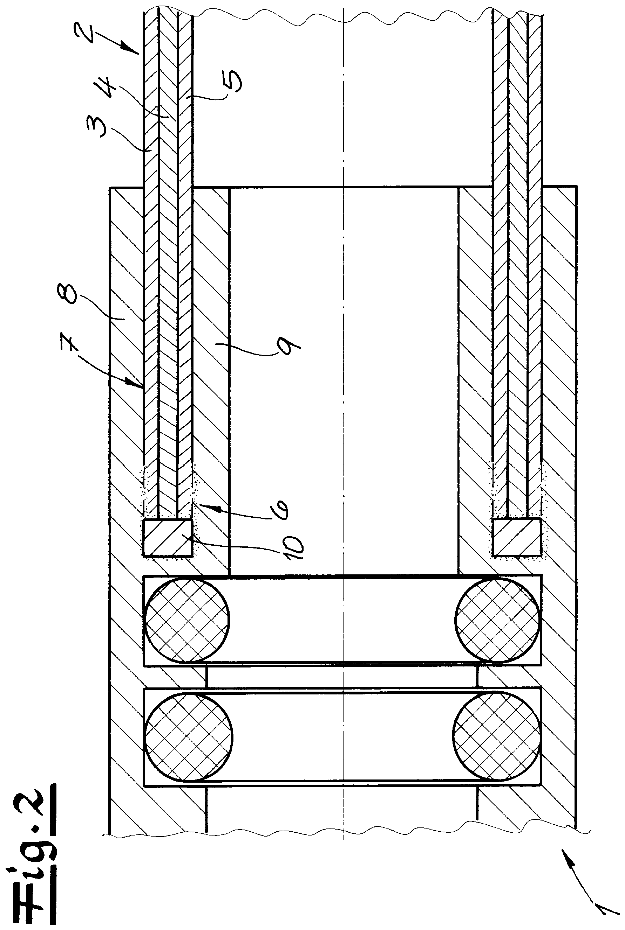

Zweckmäßigerweise und im Ausführungsbeispiel ist am Ende des Aufnahmeschachtes 7 ein über den Umfang des Leitungsverbinders 1 umlaufendes ringförmiges Metallelement 10 angeordnet. Das als Metallelement 10 ausgebildete Leitfähigkeitselement mag im Ausführungsbeispiel aus einem Stahl bestehen. Das Rohrleitungsende 6 liegt in seinem in den Figuren dargestellten, in den Aufnahmeschacht 7 eingeführten Zustand mit seiner Stirnseite an dem Metallelement 10 an. Erfindungsgemäß wird das Metallelement 10 durch elektromagnetische Induktion erhitzt. Dazu wird ein elektromagnetisches Wechselfeld 11 im Bereich des Metallelementes 10 erzeugt, das in der Fig. 1 schematisiert dargestellt ist. Als Folge der Erhitzung schmelzen Kunststoffbereiche des Rohrleitungsendes 6 am Stirnende des Rohrleitungsendes 6 auf. Bevorzugt und im Ausführungsbeispiel schmelzen auch Kunststoffbereiche an den Wandungen 8, 9 des Aufnahmeschachtes 7 auf. Dadurch wird das Rohrleitungsende mit den Wandungen 8, 9 des Aufnahmeschachtes 7 des Leitungsverbinders 1 verschweißt. Erfindungsgemäß findet also ein Induktionsschweißen statt und dadurch wird das Rohrleitungsende 6 der Rohrleitung 2 stoffschlüssig mit Wandungen 8, 9 des Aufnahmeschachtes 7 des Leitungsverbinders 1 verbunden bzw. verschweißt. Die Fig. 2 zeigt den verschweißten Zustand des Aggregates aus Leitungsverbinder 1 und Rohrleitung 2.

## Patentansprüche

1. Verfahren zur Verbindung eines Leitungsverbinders (1) mit einer fluidführenden Kraftfahrzeugrohrleitung (2), wobei die Rohrleitung (2) aus Kunststoff bzw. im Wesentlichen aus Kunststoff besteht, wobei ein Rohrleitungsende (6) der Rohrleitung (2) in einen über den Umfang des Leitungsverbinders (1) umlaufenden Aufnahmeschacht (7) des Leitungsverbinders (1) eingeführt wird, wobei vorzugsweise die Wandung bzw. die Wandungen (8, 9) des Aufnahmeschachtes (7) zumindest zum Teil aus Kunststoff bestehen, wobei in dem Aufnahmeschacht (7) zumindest ein Leitfähigkeitselement (10) angeordnet ist, wobei das Leitfähigkeitselement (10) durch elektromagnetische Induktion erhitzt wird und wobei als Folge dieser Erhitzung zumindest Kunststoffbereiche des Rohrleitungsendes (6) aufschmelzen, so dass das Rohrleitungsende (6) mit der Wandung bzw. den Wandungen (8, 9) des Aufnahmeschachtes (7) verschweißt wird, wobei das Rohrleitungsende (6) mit seiner Außenwand und mit seiner Innenwand unmittelbar an den Wandungen (8, 9) des Aufnahmeschachtes (7) anliegt, wobei das Leitfähigkeitselement (10) ringförmig und im Querschnitt kreisförmig ausgebildet ist **dadurch gekennzeichnet, dass** der Innendurchmesser des ringförmigen Leitfähigkeitselementes (10) dem Innendurchmesser des Rohrleitungsendes (6) entspricht und dass der Außendurchmesser des ringförmigen Leitfähigkeitselementes (10) dem Außendurchmesser des Rohrleitungsendes (6) entspricht.

2. Verfahren nach Anspruch 1, wobei die Kraftfahrzeugrohrleitung (2) als mehrschichtige Rohrleitung (2) ausgebildet ist und wobei die Außenschicht (3) und/oder die Innenschicht (5) der Rohrleitung (2) aus Kunststoff besteht.

3. Verfahren nach einem der Ansprüche 1 oder 2, wobei die Außenschicht (3) der Rohrleitung (2) aus zumindest einem Polymer aus der Gruppe "Polyamid, Polyphenylensulfid, Polyphthalamid" besteht.

4. Verfahren nach einem der Ansprüche 1 bis 3, wobei die Innenschicht (5) der Rohrleitung (2) aus zumindest einem Polymer aus der Gruppe "Polyamid, Fluorpolymer, Polyphenylensulfid, Polybutylennaphthalat" besteht.

5. Verfahren nach einem der Ansprüche 1 bis 4, wobei die Wandungen (8, 9) des Aufnahmeschachtes (7) des Leitungsverbinders (1) aus Kunststoff, vorzugsweise aus Polyamid oder Polyphthalamid bestehen bzw. im Wesentlichen bestehen.

6. Verfahren nach einem der Ansprüche 1 bis 5, wobei die Rohrleitung (2) im Querschnitt kreisförmig ausgebildet ist und wobei der Aufnahmeschacht (7) zylinderförmig bzw. im Querschnitt kreisförmig ausgebildet ist.

7. Verfahren nach einem der Ansprüche 1 bis 6, wobei das Leitfähigkeitselement (10) mit der Maßgabe angeordnet ist, dass das Rohrleitungsende (6) im in den Aufnahmeschacht (7) eingeführten Zustand mit seinem Stirnende an dem Metallelement (10) anliegt.

8. Verfahren nach einem der Ansprüche 2 bis 7, wobei das Rohrleitungsende (6) zumindest an seinem Stirnende zumindest an der Außenschicht (3) und/ oder an der Innenschicht (5) aufgeschmolzen wird, so dass das Rohrleitungsende (6) mit der Wandung bzw. mit den Wandungen (8, 9) des Aufnahmeschachtes (7) verschweißt wird.

9. Verfahren nach einem der Ansprüche 1 bis 8, wobei die Innenwandung (8) und/oder die Außenwandung (9) des Aufnahmeschachtes (7) des Leitungsverbinders (1) zumindest bereichsweise aufgeschmolzen wird, so dass das Rohrleitungsende (6) mit der Wandung bzw. den Wandungen (8, 9) des Aufnahmeschachtes (7) verschweißt wird.

10. Verfahren nach einem der Ansprüche 1 bis 9, wobei das Rohrleitungsende (6) formschlüssig und insbesondere spielfrei in den Aufnahmeschacht (7) eingeführt wird.

11. Verfahren nach einem der Ansprüche 1 bis 10, wobei die Länge des Aufnahmeschachtes (7) mindestens 25%, bevorzugt mindestens 20% der Länge des Leitungsverbinders (1) beträgt.

## Claims

1. A method for connecting a line connector (1) to a fluid-carrying motor vehicle pipeline (2), the pipeline (2) consisting of plastic or substantially of plastic, one pipeline end (6) of the pipeline (2) being introduced into a receiving shaft (7) of the line connector (1), which runs around the circumference of the line connector (1), the wall or walls (8, 9) of the receiving shaft (7) preferably consisting at least partially of plastic, at least one conductive element (10) being arranged in the receiving shaft (7), the conductive element (10) being heated by electromagnetic induction, and at least plastic regions of the pipeline end (6) melting as a result of said heating, so that the pipeline end (6) is fused to the wall or walls (8, 9) of the receiving shaft (7), the outer wall and the inner wall of the pipeline end (6) bearing directly against the walls (8, 9) of the receiving shaft (7), the conductive element (10) being annular and having a circular cross-section,
**characterised in that**
the inner diameter of the annular conductive element (10) corresponds to the inner diameter of the pipeline end (6), and
the outer diameter of the annular conductive element (10) corresponds to the outer diameter of the pipeline end (6).

2. The method according to Claim 1, wherein the motor vehicle pipeline (2) is in the form of a multi-layered pipeline (2) and wherein the outer layer (3) and/or the inner layer (5) of the pipeline (2) consist(s) of plastic.

3. The method according to any one of Claims 1 or 2, wherein the outer layer (3) of the pipeline (2) consists of at least one polymer from the group "polyamide, polyphenylene sulphide, polyphthalamide".

4. The method according to any one of Claims 1 to 3, wherein the inner layer (5) of the pipeline (2) consists of at least one polymer from the group "polyamide, fluoropolymer, polyphenylene sulphide, polybutylene naphthalate".

5. The method according to any one of Claims 1 to 4, wherein the walls (8, 9) of the receiving shaft (7) of the line connector (1) consist or substantially consist of plastic, preferably of polyamide or polyphthalamide.

6. The method according to any one of Claims 1 to 5, wherein the pipeline (2) has a circular cross-section and wherein the receiving shaft (7) is cylindrical or has a circular cross-section.

7. The method according to any one of Claims 1 to 6, wherein the conductive element (10) is arranged with the proviso that the end face of the pipeline end (6) bears against the metal element (10) when the pipeline end has been introduced into the receiving shaft (7).

8. The method according to any one of Claims 2 to 7, wherein the pipeline end (6) is melted, at least at the end face thereof, at least one the outer layer (3) and/or on the inner layer (5) thereof, so that the pipeline end (6) is fused with the wall or walls (8, 9) of the receiving shaft (7).

9. The method according to any one of Claims 1 to 8, wherein the inner wall (8) and/or the outer wall (9) of the receiving shaft (7) of the line connector (1) is melted, at least in some regions, so that the pipeline end (6) is fused with the wall or walls (8, 9) of the receiving shaft (7).

10. The method according to any one of Claims 1 to 9, wherein the pipeline end (6) is introduced into the receiving shaft (7) in a form-fitting and in particular zero-clearance manner.

11. The method according to any one of Claims 1 to 10, wherein the length of the receiving shaft (7) is at least 25%, preferably at least 20% of the length of the line connector (1).

## Revendications

1. Procédé pour relier un raccord de conduite (1) avec une conduite de véhicule automobile (2) guidant du fluide, la conduite (2) étant composée de matière plastique ou pour l'essentiel de matière plastique, une extrémité de conduite (6) de la conduite (2) étant introduite dans un logement de réception (7) circulaire du raccord de conduite (1) sur la périphérie du raccord de conduite (1), la paroi ou les parois (8,9) du logement de réception (7) étant de préférence composées au moins en partie de matière plastique, au moins un élément de conductivité (10) étant disposé dans le logement de réception (7), l'élément de conductivité (10) étant chauffé par induction électromagnétique et au moins des zones de plastique de l'extrémité de conduite (6) fondant à la suite de cet échauffement de telle sorte que l'extrémité de conduite (6) est soudée à la paroi ou aux parois (8,9) du logement de réception (7), l'extrémité de conduite (6) reposant directement sur les parois (8,9) du logement de réception (7) avec sa paroi extérieure et avec sa paroi intérieure, l'élément de conductivité (10) étant constitué de forme annulaire et de forme circulaire dans la section transversale, **caractérisé en ce que** le diamètre intérieur de l'élément de conductivité (10) de forme annulaire correspond au diamètre intérieur de l'extrémité de conduite (6) et **en ce que** le diamètre extérieur de l'élément de conductivité (10) de forme annulaire correspond au diamètre extérieur de l'extrémité de conduite (6).

2. Procédé selon la revendication 1, la conduite de véhicule automobile (2) étant constituée comme conduite multicouche (2) et la couche extérieure (3) et/ou la couche intérieure (5) de la conduite (2) étant composées de matière plastique.

3. Procédé selon l'une quelconque des revendications 1 ou 2, la couche extérieure (3) de la conduite (2) étant composée d'au moins un polymère du groupe « polyamide, sulfure de polyphénylène, polyphtalamide ».

4. Procédé selon l'une quelconque des revendications 1 à 3, la couche intérieure (5) de la conduite (2) étant composée d'au moins un polymère du groupe « polyamide, polymère fluoro-carboné, sulfure de polyphénylène, naphtalate de polybutylène ».

5. Procédé selon l'une quelconque des revendications 1 à 4, les parois (8,9) du logement de réception (7) du raccord de conduite (1) étant composées ou étant composées pour l'essentiel de matière plastique, de préférence de polyamide ou de polyphtalamide.

6. Procédé selon l'une quelconque des revendications 1 à 5, la conduite (2) étant constituée de forme circulaire dans la section transversale et le logement de réception (7) étant constitué de forme cylindrique ou de forme circulaire dans la section transversale.

7. Procédé selon l'une quelconque des revendications 1 à 6, l'élément de conductivité (10) étant disposé en fonction du fait que l'extrémité de conduite (6) repose avec son extrémité avant, à l'état introduit dans le logement de réception (7), sur l'élément métallique (10).

8. Procédé selon l'une quelconque des revendications 2 à 7, l'extrémité de conduite (6) étant fondue au moins sur son extrémité avant au moins sur la couche extérieure (3) et/ou sur la couche intérieure (5) de telle manière que l'extrémité de conduite (6) est soudée à la paroi ou aux parois (8,9) du logement de réception (7).

9. Procédé selon l'une quelconque des revendications 1 à 8, la paroi intérieure (8) et/ou la paroi extérieure (9) du logement de réception (7) du raccord de conduite (1) étant fondues au moins par section de telle manière que l'extrémité de conduite (6) est soudée à la paroi ou aux parois (8,9) du logement de réception (7).

10. Procédé selon l'une quelconque des revendications 1 à 9, l'extrémité de conduite (6) étant introduite dans le logement de réception (7) par conformité de forme et notamment sans jeu.

11. Procédé selon l'une quelconque des revendications 1 à 10, la longueur du logement de réception (7) étant au moins 25%, de préférence au moins 20% de la longueur du raccord de conduite (1).
